# EUROPEAN PATENT APPLICATION

(11) **EP 0 908 289 A1**
(43) Date of publication of application: **14.04.1999**
(21) Application number: 98308054.0
(22) Date of filing: 02.10.1998
(51) Int. Cl.: B29C 47/06, B29C 47/86

(54) **Annular co-extrusion die**

(30) Priority: 09.10.1997 US 947936
(71) Applicant: Macro Engineering & Technology Inc., Mississauga, Ontario L4Z 2E5 (CA)
(72) Inventor: Planeta, Mirek, Mississauga, Ontario L4Z 2E5 (CA); Sagar, Surendra, Mississauga, Ontario L5M 4X6 (CA)
(74) Representative: Newstead, Michael John

(57) **Abstract**

A composite annular co-extrusion die assembly for extruding multi-layer tubular plastic film (70), has a main die (10) and a supplementary die (50) surrounding the main die (10) and fixedly secured thereto. The main die (10) has stacked die members forming helical passages therebetween, and a further die member co-operating with the stacked die members (14,16,18) to form a longitudinally extending annular passage (22) therebetween for conveying plastic material from the helical passages to an annular extrusion orifice (34). The supplementary die (50) has annular inner die members (52,54) forming at least one radially inwardly extending helical passage (62) therebetween for conveying further plastic material to a location (64) immediately adjacent the annular extrusion orifice (34) of the main die (10) to cause the further plastic material to become bonded to the plastic material being extruded from the main die (10).

## Description

This invention relates to annular co-extrusion dies for co-extruding different synthetic plastic materials.

Such dies are of course well known, but the co-extrusion of different plastic materials which have to be extruded at significantly different temperatures has always presented a problem, especially when one of the plastic materials will tend to decompose at a minimum temperature required for co-extrusion of another plastic material. Attempts have been made to deal with this problem, see for example U.S. Patent No. 4,798,526 (Briggs et al) issued January 17, 1989, U.S. Patent No. 5,069,612 (Teutsch et al) issued December 3, 1991 and U.S. Patent No. 5,393,216 (Teutsch et al) issued February 28, 1995. Although the co-extrusion dies described in these patents are useful when co-extruding various different plastic materials, they are unsuitable for co-extrusion of plastic materials such as PVDC and nylon or polyesters because PVDC tends to decompose at temperatures in the range from about 250 to about 270°C which are required for the extrusion of nylon or polyesters and, in such dies, the different plastic materials being co-extruded are in contact with each other for an appreciable length of time. The problem becomes especially serious if extrusion from such a die is stopped, for example in the event of a power failure.

It is therefore an object of the invention to provide an annular co-extrusion die which overcomes or at least substantially reduces the problem described above.

According to the invention, a composite annular co-extrusion die assembly for extruding multi-layer tubular plastic film has a main die and a supplementary die surrounding the main die and fixedly secured thereto. The main die has stacked die members forming helical passages therebetween, and a further die member co-operating with the stacked die members to form a longitudinal extending annular passage therebetween for conveying plastic material from the helical passages to an annular extrusion orifice. The supplementary die has annular die members to forming at least one radially inwardly extending helical passage therebetween for conveying further plastic material to a location immediately adjacent the annular extrusion orifice to cause the further plastic material to become bonded to the plastic material being extruded from the main die.

Each helical passage of the supplementary die may convey the further plastic material to a second annular extrusion orifice which is immediately adjacent to and radially outwardly of the first mentioned annular extrusion orifice. Alternatively, each helical passage of the supplementary die may convey the further plastic material to a location immediately adjacent to and upstream of the annular die orifice, the location being in the flow of plastic material from the longitudinally extending annular passage of the main die.

The main die may have heaters for maintaining the main die at a first temperature suitable for extrusion of the plastic material extruded therefrom, and the supplementary die may have heaters for maintaining the supplementary die at a second temperature for extruding the further plastic material therefrom.

Embodiments of the invention will now be described, by way of example, with reference to the accompanying drawings, of which:
Fig. 1 is a diagrammatic sectional view of the right hand half of the upper part of a composite co-extrusion die assembly in accordance with one embodiment of the invention,
Fig. 2 is a similar view of the left hand half of the upper part of a composite annular co-extrusion die assembly in accordance with a second embodiment, and
Fig. 3 is a similar view of the left hand half of the upper part of a composite annular extrusion die in accordance with a third embodiment.

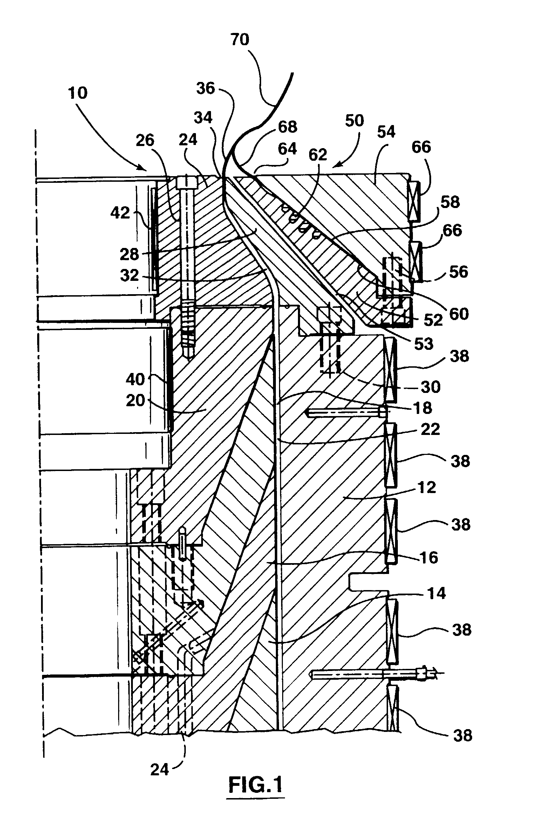

Referring to the drawings, the composite annular co-extrusion die assembly shown in Fig. 1 has a main die 10 with an annular outer die body member 12, a series of inner die mandrels 14, 16, 18 stacked one upon the other and an uppermost inner die mandrel 20 mounted on top of the mandrel 18. The inner die mandrels form upwardly and outwardly extending helical grooves (not shown) therebetween and feed different plastic materials to a longitudinally extending annular extrusion passage 22 formed between the outer surfaces of the side walls of the mandrels 14, 16, 18, 20 and the inner surface of the outer die body member 12, the different plastic materials having been fed to the helical grooves by internal feed passages 24 (only one of which is shown).

An inner annular main die lip member 24 is mounted on top of upper mandrel 20 and is secured thereto by bolts 26. An outer annular main die lip member 28 is mounted on outer die body member 12 and is secured thereto by bolts 30. The lip members 24, 28 co-operate to form an annular extrusion passage 32 and an annular extrusion orifice 34. The different plastic materials in annular passage 22 are fed into extrusion passage 32 and are extruded as a multi-layer tubular film 36 from annular die orifice 34.

The exterior of the outer die body member 12 is provided with a series of heaters 38. Also, heaters 40, 42 are provided in the interior of the upper mandrel 20 and the inner die lip member 24 respectively. The heaters 38, 40, 42 are controlled to maintain the different plastic materials passing through the annular passages 22 and 32 at a suitable relatively low temperature. The annular die orifice 34 can be adjusted by laterally moving the outer die lip member 28 (after loosening the bolts 30).

The feed of different plastic materials through the main die 10 is more fully described and illustrated in U.S. Patent No. 08/674,004 filed July 1, 1996, the contents of which are hereby incorporated herein by reference.

In accordance with the invention, the multi-layer tubular plastic film 36 being extruded from the main die orifice 34 can be provided with an outer layer of plastic material which has to be extruded at a significantly higher temperature than the temperature of the plastic materials in the annular passages 22 and 32. The main die 10 is provided with a supplementary annular die 50 which has an annular supplementary mandrel 52 surrounding and spaced by an air gap 53 from the outer main die lip member 28, and with a supplementary outer die member 54, the supplementary mandrel 52 being secured to the supplementary outer die member 54 by bolts 56. The supplementary die 50 is fixedly secured to the outer body member 12 of the main die 10 in any suitable manner (not shown).

The secondary mandrel 52 has a radially inwardly and upwardly extending outer surface 58, and the supplementary body member 54 has a radially inwardly and upwardly extending inner surface 60 adjacent the mandrel outer surface 58. The mandrel surface 58 has a helical groove 62 which cooperates with the inner surface 60 of the supplementary body member 54 to form an upwardly and radially inwardly extending helical passage which terminate at its upper end at a supplementary annular die orifice 64 which is radially outwardly spaced by a short distance from the main annular die orifice 32. The lower end of the helical groove 52 is supplied with plastic material through a passage (not shown) in the supplementary outer die member 54, the outer surface of which is provided with heater 66.

The plastic film 68 extruded from the annular orifice 64 of the supplementary die 50 contacts the multi-layer film 36 very shortly after it leaves the die orifice 34. At this point, the film 68 is cooling rapidly so that the plastic material of the multi-layer film 36 is not adversely affected by the temperature thereof. There is however still sufficient heat to cause the film 68 to bond to the multi-layer film 36 and form a composite multi-layer film 70. The heaters 66 are controlled so as to maintain the supplementary die 50 at a suitable temperature (higher than that of the main die 10) for extrusion of the film 68.

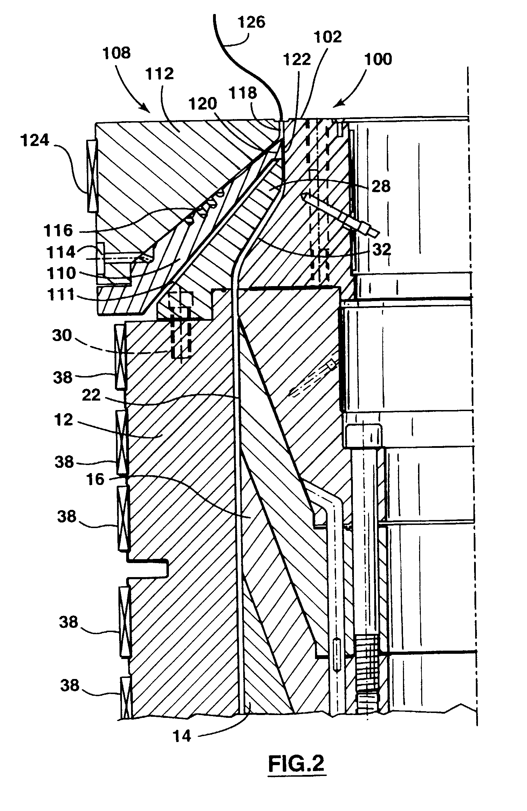

In the embodiment shown in Fig. 2, the main die 100 is substantially the same as the main die 10 in the previous embodiment, and the same reference numerals are used to indicate like parts. However, the main inner die lip member 102 extends beyond the outer die lip member 28. A supplementary annular extrusion die 108 has a supplementary mandrel 110 surrounding and spaced by air gap 111 from the outer die lip member 28, and a supplementary outer die member 112 is secured to the supplementary mandrel 110 by bolts 114. The supplementary mandrel 110 has a helical groove 16 similar to the groove 62 of supplementary die 50 in the previous embodiment. The upper radially inner surface of supplementary die member 112 forms an annular passage 118 with the upper part of the outer surface of the inner lip member 102 of the main die 100.

The air gap 111 between the supplementary inner mandrel 110 and the main outer lip member 28 terminates just before the upper end thereof, the upper end of the supplementary mandrel 110 having a nose portion 120 which engages the top of the main outer lip member 28 and forms an annular passage 122 with the outer surface of the inner member 102. The supplementary outer die member 112 is provided with a heater 124.

Multi-layer plastic material passing along annular passage 32 then proceeds along annular passage 112 and is then joined by the plastic material from the supplementary die 108, with the composite multi-layer plastic material then passing along annular passage 118 and then being extruded from the die as a composite multi-layer tubular film 126. The annular passage 118 is very short, so that the multi-layer plastic material from the main die 108 is not adversely affected by the substantially higher temperature of the plastic material from the supplementary die 108, although the temperature of the multi-layer material is high enough to cause the plastic material from the supplementary die 108 to bond thereto.

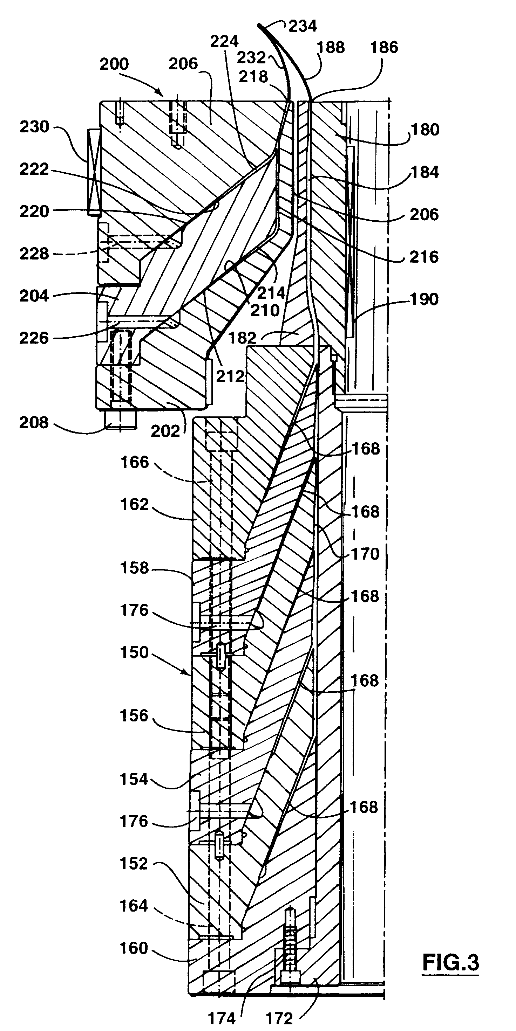

In the embodiment shown in Fig. 3, the main die 150 has a series of outer die mandrels 152, 154, 156, 158 stacked one upon the other, a lowermost outer die mandrel 160-and an uppermost outer die mandrel 162 held together by bolts 164, 168. The outer die mandrels form upwardly and inwardly extending helical grooves 168 therebetween and feed different plastic materials to an annular extrusion passage 170 formed between the inner surfaces of the outer die mandrels and the outer surface of an inner die body member 172. Secured to the lowermost outer die mandrel 160 by bolts 174. The different plastic materials are fed to the helical grooves 168 by radially inwardly extending feed passages 176.

An inner annular main die lip member 180 is mounted on top of inner die mandrel 172 and is secured thereto by bolts (not shown). An outer annular main die lip member 182 is mounted on uppermost die mandrel 162 and secured thereto by bolts (not shown). The lip members 180, 182 co-operate to form an annular extrusion passage 184 and an annular extrusion orifice 186. The different plastic materials in annular passage 170 are fed into annular passage 184 and are extruded as a multi-layer film 188 from annular die orifice 186.

The outer die mandrels 152,154,156, 158,160,162 are provided with a series of heaters (not shown), and heaters (not shown) are also provided on the interior of inner die body member 172. Also, a heater 190 is provided on the interior of inner lip member 180.

In accordance with the invention, the multi-layer plastic film being extruded from the main die orifice 186 can be provided with two outer layers of plastic material which have to be extruded at a significantly higher temperature than the temperature of the plastic materials in the annular passages 170, 184. The main die 150 is provided with a supplementary annular die 200 which has a lower supplementary die member 202 surrounding and spaced by an air gap 204 from the outer main die lip member 182, a second and upper supplementary die mandrel 204 mounted on the lower supplementary die mandrel 202, and a supplementary outer die member 206. The supplementary upper die mandrel 204 is secured to the supplementary lower die mandrel 202 by bolts 208, and the upper supplementary die member 206 is secured to the upper supplementary die mandrel 204 by bolts (not shown). The supplementary die 200 is fixedly secured to the main die 150 in any suitable manner.

The lower supplementary die mandrel 202 has a radially inwardly and upwardly inclined upper surface 210, and the supplementary die mandrel 204 has a radially inwardly and upwardly inclined lower surface 212 adjacent the upper surface 210 of the supplementary die mandrel 202. One of the surfaces 210, 212 has a helical groove (not shown) which co-operates with the other surface 210, 212 to form an upwardly and radially inwardly extending helical passage 214 which extends to a longitudinally extending annular passage 216. The annular passage 216 terminates at its upper end at a supplementary annular die orifice 218 which is radially outwardly spaced by a short distance from the inner annular die orifice 186.

The supplementary die mandrel 204 has a radially inwardly and upwardly extending upper surface 220, and the upper supplementary die member 206 has a radially inwardly and upwardly extending lower surface 222 adjacent the upper surface 220 of the supplementary die mandrel 202. One of the surfaces 220, 222 has a helical groove (not shown) which co-operates with the other surface 220, 222 to form an upwardly and radially inwardly inclined helical passage 224 which extends at its upper end into the annular passage 216 leading to the supplementary die orifice 218.

The lower ends of the helical grooves 214, 224 are supplied with different plastic materials through passages 226, 288 in the supplementary die mandrel 204 and the upper supplementary die member 206 respectively. The outer surface of the upper supplementary die member 206 is provided with a heater 230.

The 2-layer plastic film 232 extruded from the annular orifice 218 of the supplementary die 20 contacts the multi-layer film 188 very shortly after it leaves the main die orifice 218, in the same manner as the single-layer plastic film 68 and the multi-layer film 36 in the embodiment shown in Fig. 1, to form a composite multi-layer film 234.

Although in the embodiments described above the supplementary dies are used for the extrusion of plastic material requiring a substantially higher temperature than the plastic material extruded from the main die, it is possible with some combinations of plastic materials for the supplementary die to be used for extruding plastic material which requires a substantially lower temperature than the plastic material extruded from the main die.

The advantages of the invention will be readily apparent to a person skilled in the art from the foregoing description of preferred embodiments. Other embodiments of the invention will also be readily apparent to a person skilled in the art, the scope of the invention being defined in the appended claims.

## Claims

1. A composite annular co-extrusion die assembly for extruding multi-layer tubular plastic film, said die assembly having a main die and a supplementary die surrounding the main die and fixedly secured thereto,
the main die having stacked die members forming helical passages therebetween, and a further die member co-operating with the stacked die members to form a longitudinally extending annular passage therebetween for conveying plastic material from the helical passages to an annular extrusion orifice, and
the supplementary die having annular inner die members forming at least one radially inwardly extending helical passage therebetween for conveying further plastic material to a location immediately adjacent the annular extrusion orifice of the main die to cause the further plastic material to become bonded to the plastic material being extruded from the main die.

2. A composite annular co-extrusion die assembly according to claim 1 wherein each helical passage of the supplementary die conveys the further plastic material to a second annular extrusion orifice which is immediately adjacent to and radially outwardly of the first mentioned annular extrusion orifice.

3. A composite annular co-extrusion die assembly according to claim 1 wherein each helical passage of the supplementary die conveys the further plastic material to a location in the longitudinally extending annular passage of the main die immediately adjacent to and upstream of the annular extrusion orifice.

4. A composite annular co-extrusion die assembly according to claim 1 wherein the main die has heaters maintaining the main die at a first temperature suitable for extrusion of the plastic material extruded therefrom, and the supplementary die has heaters for maintaining the supplementary die at a second temperature suitable for extruding the further plastic material therefrom.

5. A composite annular co-extrusion die assembly for extruding multi-layer tubular plastic film, the die assembly having a main die and a supplementary die surrounding the main die and fixedly secured thereto,
the main die having die members forming passages therebetween for feeding different plastic materials therealong to a common annular passage which conveys subsequent multi-layer plastic material to an annular extrusion orifice, and
the supplementary die having annular die members forming at least one passage therebetween for conveying further plastic material to a location immediately adjacent the annular extrusion orifice of the main die to cause the further plastic material to become bonded to the multi-layer plastic material being extruded from the main die.
